# EUROPEAN PATENT APPLICATION

(11) **EP 4 411 024 A2**
(43) Date of publication of application: **07.08.2024**
(21) Application number: 23218137.0
(22) Date of filing: 19.12.2023
(51) Int. Cl.: C25B 1/04, C25B 9/19, C25B 11/02, C25B 11/04, C25B 15/08, H01M 10/54

(54) **WATER ELECTROLYSIS APPARATUS, WATER ELECTROLYSIS METHOD, AND METHOD OF RECYCLING NICKEL-HYDROGEN RECHARGEABLE BATTERY**

(30) Priority: 20.01.2023 JP 2023007608
(71) Applicant: TOYOTA JIDOSHA KABUSHIKI KAISHA, Toyota-shi, Aichi-ken, 471-8571 (JP)
(72) Inventor: NAKANISHI, Haruyuki, Aichi-ken, 471-8571 (JP)
(74) Representative: D Young & Co LLP

(57) **Abstract**

A water electrolysis apparatus includes: a power source; an electrolytic solution; a first tank immersed in the electrolytic solution and including a positive electrode connected to the power source, a supply opening and a discharge opening for H₂O, and an O₂ gas extraction opening; and a second tank immersed in the electrolytic solution and including a negative electrode connected to the power source, a supply opening and a discharge opening for H₂O, and an H₂ gas extraction opening. O₂ gas is extracted from the first tank, and H₂ gas is extracted from the second tank, by the power source maintaining voltage such that the potential of the positive electrode is higher than the potential of the negative electrode.

## Description

### BACKGROUND

### Technical Field

The present disclosure relates to a water electrolysis apparatus, a water electrolysis method and a method of recycling a nickel-hydrogen rechargeable battery.

### Related Art

The demand for hydrogen (H₂) gas as energy for fuel cell vehicles and for power generation has increased in recent years, and research into methods of producing H₂ gas also has advanced. An example of a method of producing H₂ gas is a method of separating water (H₂O) into and recovering hydrogen (H₂) gas and oxygen (O₂) gas by a water electrolysis reaction.

For example, Japanese Patent Application Laid-Open (JP-A) No. 2021-017628 discloses a hydrogen gas producing device including a water electrolysis cell and a power source. The water electrolysis cell includes a first electrode, a second electrode and an alkaline aqueous solution. The first electrode and the second electrode each contact the alkaline aqueous solution, and are disposed so as to be apart from one another. The first electrode contains a hydrogen absorbing alloy. The hydrogen absorbing alloy has a dissociation equilibrium pressure of 0.2 MPa or more at 20°C. The first electrode and the second electrode are each connected to the power source. The power source applies voltage between the electrodes such that the first electrode becomes the negative electrode and the second electrode becomes the positive electrode, and hydrogen gas is generated at the first electrode by electrolysis of the alkaline aqueous solution.

### SUMMARY

However, in a case of recovering hydrogen (H₂) gas and oxygen (O₂) gas by a water electrolysis reaction, the generated H₂ gas and O₂ gas react explosively if mixed together, and therefore, there is the need to recover the H₂ gas and the O₂ gas safely and in a state in which the respective purities thereof are high.

Based on this conventional need, the present disclosure provides a water electrolysis apparatus and a water electrolysis method that can safely retrieve H₂ gas and O₂ gas having high purities. Further, the present disclosure also provides a method of recycling a nickel-hydrogen rechargeable battery that can safely retrieve H₂ gas and O₂ gas having high purities, re-using a used nickel-hydrogen rechargeable battery.

A first aspect of the present disclosure provides a water electrolysis apparatus including:
a power source;
an electrolytic solution;
a first tank immersed in the electrolytic solution and including a positive electrode connected to the power source, a supply opening and a discharge opening for H₂O, and an O₂ gas extraction opening; and
a second tank immersed in the electrolytic solution and including a negative electrode connected to the power source, a supply opening and a discharge opening for H₂O, and an H₂ gas extraction opening,
wherein O₂ gas is extracted from the first tank, and H₂ gas is extracted from the second tank, by the power source maintaining voltage such that a potential of the positive electrode is higher than a potential of the negative electrode, .

A second aspect of the present disclosure provides the water electrolysis apparatus according to the first aspect, wherein at least one of the first tank or the second tank is a nickel-hydrogen rechargeable battery.

A third aspect of the present disclosure provides the water electrolysis apparatus according to the second aspect, wherein the nickel-hydrogen rechargeable battery is a used rechargeable battery.

A fourth aspect of the present disclosure provides the water electrolysis apparatus according to any one of the first to third aspects, wherein the O₂ gas extraction opening and the H₂ gas extraction opening are respectively provided at gravitational direction upper portions of the first tank and the second tank.

A fifth aspect of the present disclosure provides the water electrolysis apparatus according to any one of the first to fourth aspects, wherein the supply opening and the discharge opening of the first tank, and the supply opening and the discharge opening of the second tank, are provided such that the H₂O flows from a lower portion toward an upper portion in a gravitational direction.

A sixth aspect of the present disclosure provides the water electrolysis apparatus according to any one of the first to fifth aspects, wherein the electrolytic solution has a pH of 15 or more.

A seventh aspect of the present disclosure provides the water electrolysis apparatus according to any one of the first to sixth aspects, wherein a shortest distance between the positive electrode and the negative electrode is from more than 0 mm to 35 mm.

An eighth aspect of the present disclosure provides the water electrolysis apparatus according to any one of the first to seventh aspects, wherein an overall temperature of the water electrolysis apparatus is from 40°C to 80°C.

A ninth aspect of the present disclosure provides a water electrolysis method using a water electrolysis apparatus including:
a power source;
an electrolytic solution;
a first tank immersed in the electrolytic solution and including a positive electrode connected to the power source, a supply opening and a discharge opening for H₂O, and an O₂ gas extraction opening; and
a second tank immersed in the electrolytic solution and including a negative electrode connected to the power source, a supply opening and a discharge opening for H₂O, and an H₂ gas extraction opening,
the method including maintaining voltage by the power source such that the potential of the positive electrode is higher than the potential of the negative electrode, and extracting O₂ gas from the first tank, and extracting H₂ gas from the second tank.

A tenth aspect of the present disclosure provides the water electrolysis method according to the ninth aspect, wherein a nickel-hydrogen rechargeable battery is used as at least one of the first tank or the second tank.

An eleventh aspect of the present disclosure provides the water electrolysis method according to the tenth aspect, wherein the nickel-hydrogen rechargeable battery is a used rechargeable battery.

A twelfth aspect of the present disclosure provides the water electrolysis method according to any one of the ninth to eleventh aspects, wherein the O₂ gas extraction opening and the H₂ gas extraction opening are respectively provided at gravitational direction upper portions of the first tank and the second tank.

A thirteenth aspect of the present disclosure provides the water electrolysis method according to any one of the ninth to twelfth aspects, wherein the supply opening and the discharge opening of the first tank, and the supply opening and the discharge opening of the second tank, are provided such that the H₂O flows from a lower portion toward an upper portion in a gravitational direction.

A fourteenth aspect of the present disclosure provides the water electrolysis method according to any one of the ninth to thirteenth aspects, wherein the electrolytic solution has a pH of 15 or more.

A fifteenth aspect of the present disclosure provides the water electrolysis method according to any one of the ninth to fourteenth aspects, wherein a shortest distance between the positive electrode and the negative electrode is from more than 0 mm to 35 mm.

A sixteenth aspect of the present disclosure provides the water electrolysis method according to any one of the ninth to fifteenth aspects, wherein an overall temperature of the water electrolysis apparatus is from 40°C to 80°C.

A seventeenth aspect of the present disclosure provides a method of recycling a nickel-hydrogen rechargeable battery, the method including using a used nickel-hydrogen rechargeable battery as at least one of a first tank or a second tank in a water electrolysis apparatus,
the water electrolysis apparatus including:
a power source;
an electrolytic solution;
the first tank, which is immersed in the electrolytic solution and includes a positive electrode connected to the power source, a supply opening and a discharge opening for H₂O, and an O₂ gas extraction opening; and
the second tank, which is immersed in the electrolytic solution and includes a negative electrode connected to the power source, a supply opening and a discharge opening for H₂O, and an H₂ gas extraction opening, and
the water electrolysis apparatus being configured to extract O₂ gas from the first tank, and extract H₂ gas from the second tank, by the power source maintaining voltage such that a potential of the positive electrode is higher than a potential of the negative electrode.

In accordance with the present disclosure, there can be provided a water electrolysis apparatus and a water electrolysis method that can safely extract H₂ gas and O₂ gas having high purities. Further, in accordance with the present disclosure, there can be provided a method of recycling a nickel-hydrogen rechargeable battery that re-uses a used nickel-hydrogen rechargeable battery and can safely extract H₂ gas and O₂ gas having high purities.

### BRIEF DESCRIPTION OF THE DRAWINGS

Fig. 1 is a schematic perspective view illustrating an example of a water electrolysis apparatus in an embodiment of the present disclosure;
Fig. 2 is a schematic perspective view illustrating an example of a water electrolysis apparatus in another embodiment of the present disclosure;
Fig. 3 is a schematic drawing illustrating the configuration of connection among plural positive electrodes of a first tank and plural negative electrodes of a second tank and a power source, in the water electrolysis apparatus illustrated in Fig. 2;
Fig. 4 is a schematic drawing illustrating the configuration of connection among plural positive electrodes of a first tank and plural negative electrodes of a second tank and a power source, in a water electrolysis apparatus of another embodiment of the present disclosure; and
Fig. 5 is a schematic sectional view illustrating an example of the configuration of a nickel-hydrogen rechargeable battery.

### DETAILED DESCRIPTION

A water electrolysis apparatus, a water electrolysis method and a method of recycling a nickel-hydrogen rechargeable battery according to the present disclosure are described in detail hereinafter with reference to the drawings. The respective drawings described hereinafter are schematic illustrations, and sizes and shapes of respective portions are exaggerated when appropriate in order to facilitate understanding. Further, in describing the placement of a given member with respect to another member in the present specification, the expressions of simply "above" and "below" encompass both cases in which the given member is disposed directly above or directly below the another member so as to contact the another member, and cases in which the given member is disposed above or below the another member with a separate member disposed between the given member and the another member, unless otherwise indicated.

### [Water Electrolysis Apparatus and Water Electrolysis Method]

The water electrolysis apparatus according to the present disclosure includes: a power source; an electrolytic solution; a first tank immersed in the electrolytic solution and including a positive electrode connected to the power source, a supply opening and a discharge opening for H₂O, and an O₂ gas extraction opening; and a second tank immersed in the electrolytic solution and including a negative electrode connected to the power source, a supply opening and a discharge opening for H₂O, and an H₂ gas extraction opening. Voltage is maintained by the power source such that the potential of the positive electrode is higher than the potential of the negative electrode, thereby enabling O₂ gas to be extracted from the first tank, and H₂ gas to be extracted from the second tank.

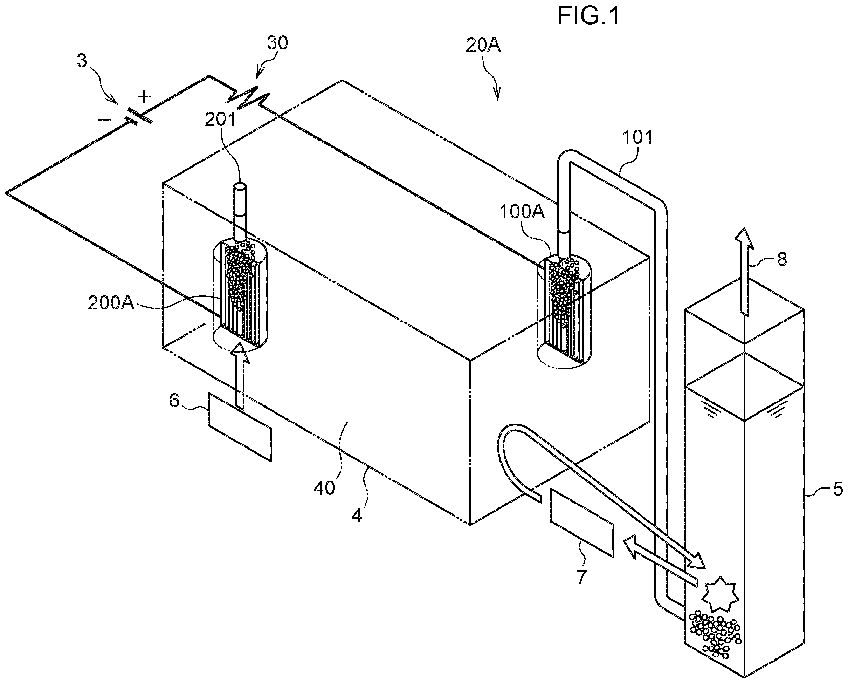

An embodiment of the water electrolysis apparatus according to the present disclosure is described with reference to Fig. 1.

Fig. 1 is a schematic perspective view illustrating an example of a water electrolysis apparatus in an embodiment of the present disclosure. As illustrated in Fig. 1, a water electrolysis apparatus 20A includes a power source 3, a resistor 30 that is an example of an electronic load, a housing 4 that accommodates an electrolytic solution 40, a first tank 100A and a second tank 200A that are immersed in the electrolytic solution 40 in the housing 4, and a distilling device 5. Adjustment of the raising and the lowering of the voltage is carried out by the power source 3 and the resistor 30, and maintaining at a desired voltage can be carried out. Note that a power source that incorporates the function of an electronic load therein may be used. The first tank 100A includes a positive electrode and a negative electrode, and this positive electrode is connected to the power source 3 and the resistor 30. The second tank 200A includes a positive electrode and a negative electrode, and this negative electrode is connected to the power source 3 and the resistor 30. The first tank 100A has a supply opening for water. A water supply pipe (not illustrated) equipped with a water supplying pump is connected to this supply opening, and the water supplying pump (not illustrated) is driven to supply water (H₂O). Further, the first tank 100A has a discharge opening for water. A water discharge pipe (not illustrated) is connected to this discharge opening, and excess water in the first tank 100A is discharged from the discharge opening. The second tank 200A has a supply opening for water. A water supply pipe (not illustrated) equipped with a water supplying pump 6 is connected to this supply opening, and the water supplying pump 6 is driven to supply water (H₂O). Further, the second tank 200A has a discharge opening for water. A water discharge pipe (not illustrated) is connected to this discharge opening, and excess water in the second tank 200A is discharged from the discharge opening. The first tank 100A has a discharge path 101 for oxygen (O₂), and the discharge path 101 is connected to the distilling device 5. The second tank 200A has a discharge path 201 for hydrogen (H₂). Electrolytic solution is accommodated in the distilling device 5. The electrolytic solution in the distilling device 5 and the electrolytic solution 40 in the housing 4 are circulated through a flow pipe (not illustrated) that is equipped with a liquid feeding pump 7. The distilling device 5 has a discharge opening 8 for water vapor (H₂O).

The above describes an example in which a resistor is used as the electronic load. Besides a fixed resistor, for example, a variable resistor is also usable.

The water electrolysis apparatus 20A uses nickel-hydrogen rechargeable batteries as both the first tank 100A that includes a positive electrode and the second tank 200A that includes a negative electrode. These nickel-hydrogen rechargeable batteries may be used nickel-hydrogen rechargeable batteries.

Note that the term "used" means that the charge capacity has dropped to lower than that of a battery immediately after manufacture.

In the water electrolysis apparatus 20A, the voltage is maintained by the power source 3 and the resistor 30 such that the potential of the positive electrode of the first tank 100A is higher than the potential of the negative electrode of the second tank 200A. Due thereto, a water electrolysis reaction occurs in the water (H₂O) that has been supplied to the first tank 100A and the second tank 200A, and O₂ gas is generated from the first tank 100A. The generated O₂ gas is transferred through the discharge path 101 to the distilling device 5, and, in the distilling device 5, is reduced to water vapor (H₂O), which is then extracted from the discharge opening 8. Further, a water electrolysis reaction occurs in the second tank 200A to generate H₂ gas, and this H₂ gas is extracted from the discharge path 201. From the standpoint of efficiently causing a water electrolysis reaction in the water (H₂O) that has been supplied to the first tank 100A and the second tank 200A, it is preferable that the potential difference between the positive electrode and the negative electrode is maintained at 1.48 V or more. Note that the reaction formulas of the positive electrode and the negative electrode are as follows.
(positive electrode) OH⁻ → 1/2H₂O+1/4O₂+e⁻
(negative electrode) H₂O+e⁻ → 1/2H₂+OH⁻

From the standpoint of more easily advancing the water electrolysis reaction, the potential difference, which is obtained by subtracting the potential of the negative electrode of the second tank from the potential of the positive electrode of the first tank, is more preferably in the range of from 1.48 V to 2.00 V, and from the standpoint of efficiency, is even more preferably in the range of from 1.55 V to 1.80 V.

From the standpoint of ease of extraction of the O₂ gas, the O₂ gas extraction opening of the first tank 100A, i.e., the entrance to the discharge path 101 from the first tank 100A, is preferably provided at the gravitational direction upper portion of the first tank 100A. Further, from the standpoint of ease of extraction of the H₂ gas, the H₂ gas extraction opening of the second tank 200A, i.e., the entrance to the discharge path 201 from the second tank 200A, is preferably provided at the gravitational direction upper portion of the second tank 200A.

It is preferable that the supply opening and discharge opening for water (H₂O) at the first tank 100A, and the supply opening and the discharge opening for water at the second tank 200A, are all provided such that H₂O flows from a lower portion toward an upper portion in the gravitational direction. For example, at the first tank 100A and the second tank 200A, it is preferable that the water supply opening be provided at the lower portion in the gravitational direction, and that the water discharge opening be provided at the upper portion in the gravitational direction.

Another embodiment is described next.

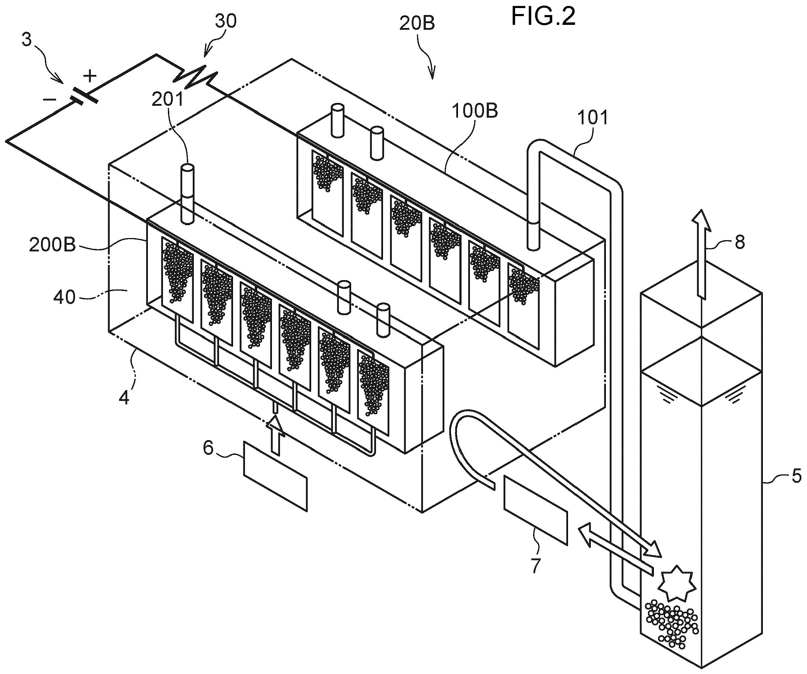

Another embodiment of the water electrolysis apparatus according to the present disclosure is described with reference to Fig. 2. Note that elements that are the same as those in the water electrolysis apparatus illustrated in Fig. 1 are denoted by the same reference numerals.

Fig. 2 is a schematic perspective view illustrating an example of a water electrolysis apparatus in an embodiment of the present disclosure. As illustrated in Fig. 2, a water electrolysis apparatus 20B includes a power source 3, a resistor 30, a housing 4 that accommodates an electrolytic solution 40, a first tank 100B and a second tank 200B that are immersed in the electrolytic solution 40 in the housing 4, and a distilling device 5. In the water electrolysis apparatus 20B, plural nickel-hydrogen rechargeable batteries (In Fig. 2, a set of six nickel-hydrogen rechargeable batteries) are used as each of the first tank 100B and the second tank 200B. The six nickel-hydrogen rechargeable batteries in the first tank 100B each include a positive electrode and a negative electrode, and all of the positive electrodes are connected to the power source 3 and the resistor 30. The six nickel-hydrogen rechargeable batteries in the second tank 200B each include a positive electrode and a negative electrode, and all of the negative electrodes are connected to the power source 3 and the resistor 30. The first tank 100B has a supply opening for water. A water supply pipe (not illustrated) equipped with a water supplying pump is connected to this supply opening, and water (H₂O) is supplied when the water supplying pump (not illustrated) is driven. The second tank 200B has a supply opening for water. A water supply pipe (not illustrated) equipped with a water supplying pump 6 is connected to this supply opening, and water (H₂O) is supplied when the water supplying pump 6 is driven. The first tank 100B has a discharge path 101 for oxygen (O₂), and the discharge path 101 is connected to a distilling device 5. The second tank 200B has a discharge path 201 for hydrogen (H₂). An electrolytic solution is accommodated in the distilling device 5. The electrolytic solution in the distilling device 5 and the electrolytic solution 40 in the housing 4 are circulated through a flow pipe (not illustrated) that is equipped with a liquid feeding pump 7. The distilling device 5 has a discharge opening 8 for water vapor (H₂O).

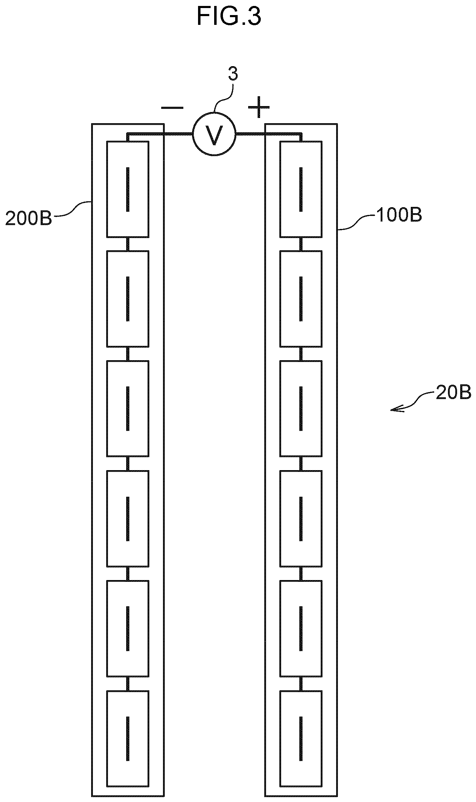

In the water electrolysis apparatus 20B illustrated in Fig. 2, the configuration of connection among the plural nickel-hydrogen rechargeable batteries (in Fig. 2, a set of six batteries) of the first tank 100B, the plural nickel-hydrogen rechargeable batteries (in Fig. 2, a set of six batteries) of the second tank 200B, and the power source 3 is illustrated in Fig. 3. Note that, in Fig. 3, illustration of elements other than the first tank 100B, the second tank 200B and the power source 3 is omitted, and illustration of the electronic load is omitted as well. As illustrated in Fig. 3, the positive electrodes respectively included in the plural nickel-hydrogen rechargeable batteries of the first tank 100B are all connected (short-circuit connected) to the power source 3. Further, the negative electrodes respectively included in the plural nickel-hydrogen rechargeable batteries of the second tank 200B are all connected (short-circuit connected) to the power source 3.

The nickel-hydrogen rechargeable batteries that are used in the first tank 100B and the second tank 200B in the water electrolysis apparatus 20B may be used nickel-hydrogen rechargeable batteries.

In the water electrolysis apparatus 20B, the voltage is maintained by the power source 3 and the resistor 30 such that the potential of the positive electrodes of the first tank 100B is higher than the potential of the negative electrodes of the second tank 200B. Due thereto, a water electrolysis reaction occurs in the water (H₂O) that has been supplied to the first tank 100B and the second tank 200B, and O₂ gas is generated from the first tank 100B. The generated O₂ gas is transferred through the discharge path 101 to the distilling device 5, and, in the distilling device 5, is reduced to water vapor (H₂O), which is then extracted from the discharge opening 8. Further, a water electrolysis reaction occurs in the second tank 200B to generate H₂ gas, and this H₂ gas is extracted from the discharge path 201. From the standpoint of efficiently causing a water electrolysis reaction in the water (H₂O) that has been supplied to the first tank 100B and the second tank 200B, it is preferable that the potential difference between the positive electrodes and the negative electrodes is maintained at 1.48 V or more. The potential difference between the positive electrodes and the negative electrodes is more preferably in the range of from 1.48 V to 2.00 V, and is more preferably in the range of from 1.55 V to 1.80 V.

From the standpoint of ease of extraction of the O₂ gas, the O₂ gas extraction opening of the first tank 100B, i.e., the entrance to the discharge path 101 from the first tank 100B, is preferably provided at the gravitational direction upper portion of the first tank 100B.

Further, from the standpoint of ease of extraction of the H₂ gas, the H₂ gas extraction opening of the second tank 200B, i.e., the entrance to the discharge path 201 from the second tank 200B, is preferably provided at the gravitational direction upper portion of the second tank 200B.

It is preferable that the supply opening and discharge opening of water (H₂O) of the first tank 100B, and the supply opening and the discharge opening of water of the second tank 200B, are all provided such that H₂O flows from a lower portion toward an upper portion in the gravitational direction. For example, at the first tank 100B and the second tank 200B, it is preferable that the water supply opening be provided at the lower portion in the gravitational direction, and that the water discharge opening be provided at the upper portion in the gravitational direction.

Note that aspects in which plural positive electrodes are included in the first tank and plural negative electrodes are included in the second tank are not limited to a configuration of short-circuit connection as illustrated in Fig. 3, and the positive electrodes, the negative electrodes and the power source may be connected in another configuration.

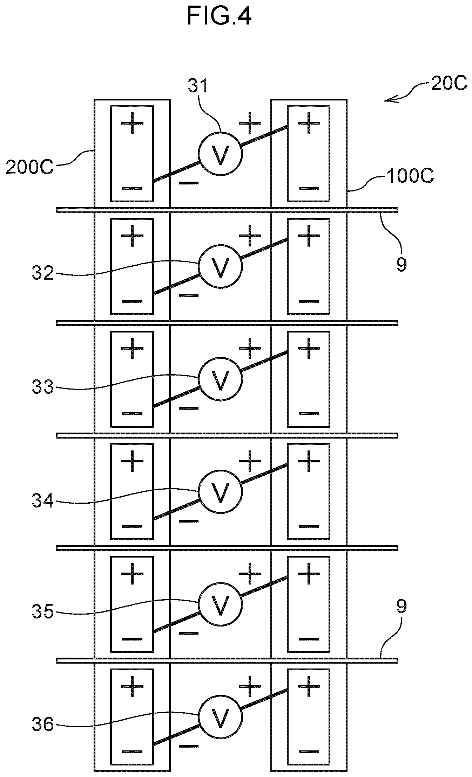

Fig. 4 is a schematic drawing illustrating a configuration of connecting plural nickel-hydrogen rechargeable batteries of the first tank and plural nickel-hydrogen rechargeable batteries of the second tank and power sources. In a water electrolysis apparatus 20C illustrated in Fig. 4, a first tank 100C includes plural (in Fig. 4, six) nickel-hydrogen rechargeable batteries, and a second tank 200C includes plural (in Fig. 4, six) nickel-hydrogen rechargeable batteries. Moreover, the water electrolysis apparatus 20C includes plural (in Fig. 4, six) power sources 31, 32, 33, 34, 35, and 36. One power source 31 is connected (normally connected) to the positive electrode of one nickel-hydrogen rechargeable battery included in the first tank 100C and the negative electrode of one nickel-hydrogen rechargeable battery included in the second tank 200C, thereby configuring a circuit. Similarly, each of the remaining power sources 32, 33, 34, 35, and 36 as well is connected (normally connected) to the positive electrode of one nickel-hydrogen rechargeable battery included in the first tank 100C and the negative electrode of one nickel-hydrogen rechargeable battery included in the second tank 200C, thereby configuring a circuit. Namely, the water electrolysis apparatus 20C includes plural (in Fig. 4, six) circuits of which the power source, positive electrode and negative electrode of each circuit are connected separately from other circuits. Further, the respective circuits are separated by separators 9. Note that, in Fig. 4, illustration of elements other than the first tank 100C, the second tank 200C and the electrodes 31, 32, 33, 34, 35, and 36 is omitted. Accordingly, in each of the circuits of the water electrolysis apparatus 20C, the positive electrode and the negative electrode are actually connected also to an electronic load, in addition to the power source.

As described above, in accordance with the water electrolysis method and water electrolysis apparatus according to the present disclosure, a first tank in which O₂ gas is generated by a water electrolysis reaction, and a second tank in which H₂ gas is generated, are provided separately in an electrolytic solution. Therefore, O₂ gas and H₂ gas can be extracted separately through respective gas extraction openings of the first tank and the second tank, and H₂ gas and O₂ gas having high purities can be extracted safely.

In the present disclosure, nickel-hydrogen rechargeable batteries can be used in one or both of the first tank and the second tank. The nickel-hydrogen rechargeable battery may be a used nickel-hydrogen rechargeable battery. Namely, in accordance with the present disclosure, H₂ gas and O₂ gas of high purities can be extracted safely, reutilizing a used nickel-hydrogen rechargeable battery.

### (Preferable Aspects)

### • Electrolytic Solution

From the standpoint of efficiently causing a water electrolysis reaction, the electrolytic solution in which the first tank and the second tank are immersed preferably has a pH of 14 or more, and more preferably has a pH of 15 or more, and even more preferably has a pH of 16 or more. The pH is a value measured at 25°C by using a pH meter.

The electrolytic solution is not particularly limited, and is preferably an aqueous electrolytic solution. For example, an alkaline aqueous solution or the like can be suitably used as the aqueous electrolytic solution. The alkaline aqueous solution contains, for example, water and an alkali metal hydroxide dissolved in water. The alkali metal hydroxide may have a concentration of, for example, from 1 mol/L to 45 mol/L. Examples of alkali metal hydroxides include potassium hydroxide (KOH), sodium hydroxide (NaOH), and lithium hydroxide (LiOH).

### • Voltage

From the standpoint of efficiently causing a water electrolysis reaction, it is preferable to maintain the voltage such that the potential difference between the positive electrode and the negative electrode is 1.48 V or more.

### • Supply of Water

From the standpoint of ease of extraction of the generated O₂ gas and H₂ gas, it is preferable that the supplying of water (H₂O) to the first tank and the second tank be carried out from the lower sides of the first tank and the second tank respectively (to allow water to flow in the tanks in a direction opposite to the gravitational direction). For example, it is preferable that water be supplied from the bottom face of the tank toward the top face of the tank by capillary action. Further, the discharge openings that discharge excess water in the first tank and the second tank are preferably provided at the upper portions of the first tank and the second tank in the gravitational direction.

### • Distance

From the standpoint of the ease of causing a water electrolysis reaction, the distance between the positive electrode of the first tank and the negative electrode of the second tank is preferably from 0 mm to 50, and more preferably from 0 mm to 35 mm, and even more preferably from 0 mm to 25 mm, and yet more preferably from 0 mm to 15 mm.

Note that the distance between the positive electrode and the negative electrode means the shortest distance between the positive electrode and the negative electrode. In a case in which the water electrolysis apparatus includes plural first tanks and plural second tanks, i.e., in a case in which the water electrolysis apparatus includes plural positive electrodes and plural negative electrodes, the distance means the shortest distance between a positive electrode and a negative electrode that are nearest each other.

### • Temperature

From the standpoint of the ease of causing a water electrolysis reaction, the overall temperature of the water electrolysis apparatus is preferably high with the maximum being 80°C, and, for example, is preferably from 20°C to 80°C, and is more preferably from 40°C to 80°C, and is even more preferably from 50°C to 80°C. Note that, in order to control the overall temperature of the water electrolysis apparatus to be in a range listed above, it is preferable to start the water electrolysis reaction after carrying out an isothermal treatment of leaving the water electrolysis apparatus in a temperature environment of a range listed above.

The measuring of the overall temperature of the water electrolysis apparatus is carried out by measuring the temperature of the electrolytic solution.

In the water electrolysis apparatuses 20A and 20B illustrated in Fig. 1 and Fig. 2, from the standpoint of the ability to transfer the O₂ gas generated in the first tank 100B to the distilling device 5, it is preferable that the temperature and pressure in the distilling device 5 are respectively lower than the temperature and pressure in the housing 4. Further, from the same standpoint, it is preferable that the position at which the distilling device 5 is disposed be lower, in the gravitational direction, than the position at which the housing 4 is disposed.

### (Nickel-Hydrogen Rechargeable battery)

The nickel-hydrogen rechargeable battery that can be used in the first tank and the second tank is described here.

Note that the nickel-hydrogen rechargeable battery (hereinafter abbreviated to "battery" upon occasion hereinafter) may be a used nickel-hydrogen rechargeable battery that has been used as, for example, a battery for a portable device, a battery for use in a vehicle, or a rechargeable battery for renewable energy generation.

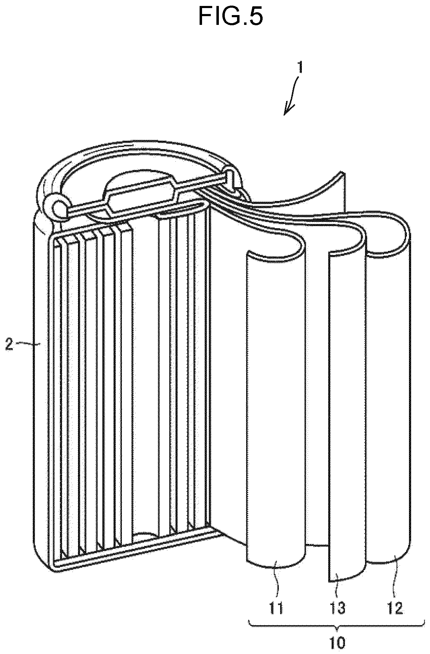

Fig. 5 is a schematic structural view illustrating an example of the configuration of a nickel-hydrogen rechargeable battery.

Battery 1 is a nickel-hydrogen rechargeable battery. The battery 1 includes a housing 2. The housing 2 is a cylindrical case and is made of metal. However, the housing 2 may have any morphology. For example, the housing 2 may be a rectangular case. The housing 2 may be, for example, a pouch made of an aluminum laminate film. The housing 2 may be made of, for example, a resin.

The housing 2 accommodates a power storage element 10 and an electrolytic solution. The power storage element 10 includes a positive electrode 11, a negative electrode 12 and a separator 13. The illustrated power storage element 10 is a wound-type element. The power storage element 10 is formed by strip-shaped electrodes being wound in a spiral form. The power storage element 10 may be, for example, a layered-type element. The power storage element 10 may be formed by, for example, layering sheet-shaped electrodes.

### <<Negative Electrode>>

The negative electrode 12 is sheet-shaped, and may have a thickness of, for example, from 10 µm to 1 mm. The negative electrode 12 has a potential that is lower than that of the positive electrode 11.

The negative electrode includes, for example, a negative electrode current collector and a negative electrode active material. Examples of the negative electrode current collector include a nickel mesh. Examples of the negative electrode active material include hydrogen absorbing alloys. The composition of the hydrogen absorbing alloy is not limited provided that absorption and releasing of hydrogen are possible. Examples of hydrogen absorbing alloys include Mm-Ni-Mn-Al-Co-based alloys. "Mm" means a compound of rare earth elements that is called Misch metal.

### <<Positive Electrode>>

The positive electrode 11 is sheet-shaped, and may have a thickness of, for example, from 10 µm to 1 mm. The positive electrode 11 has a potential that is higher than that of the negative electrode 12. The positive electrode 11 contains a positive electrode active material. The positive electrode active material may include any positive electrode active material. Examples of the positive electrode active material include nickel hydroxide (Ni(OH)₂), cobalt hydroxide (Co(OH)₂), manganese dioxide, and silver oxide. The positive electrode active material is preferably nickel hydroxide.

The positive electrode 11 may be formed of substantially only a positive electrode active material. In addition to a positive electrode active material, the positive electrode 11 may further contain a current collector material, a conductive material, a binder and the like. The current collector material may include, for example, a porous metal sheet. The current collector material is, for example, made of Ni.

For example, the positive electrode 11 can be formed by applying a positive electrode active material, a conductive material and a binder to a current collector material. The conductive material has electron conductivity. The conductive material may include any conductive material. The conductive material may include, for example, carbon black, Co, or cobalt oxide. The amount of the conductive material added may be, for example, from 0.1 parts by mass to 10 parts by mass with respect to 100 parts by mass of the positive electrode active material. The binder binds the current collector material and the positive electrode active material, and may include any binder. The binder may include, for example, ethylene-vinyl acetate (EVA). The amount of the binder added may be, for example, from 0.1 parts by mass to 10 parts by mass with respect to 100 parts by mass of the positive electrode active material.

### <<Separator>>

The separator 13 is sheet-shaped, is disposed between the positive electrode 11 and the negative electrode 12, and physically separates the positive electrode 11 and the negative electrode 12. The separator 13 may have a thickness of, for example, from 50 µm to 500 µm. The separator 13 is porous. The separator 13 may include, for example, a stretched porous film or a non-woven fabric. The separator 13 is electrically insulating. The separator may be formed of, for example, a polyolefin or a polyamide.

### «Electrolytic Solution»

The electrolytic solution is not particularly limited, but is preferably an aqueous electrolytic solution. For example, an alkaline aqueous solution or the like can be suitably used as the aqueous electrolytic solution. The alkaline aqueous solution contains, for example, water and an alkali metal hydroxide dissolved in water. The alkali metal hydroxide may have a concentration of, for example, from 1 mol/L to 20 mol/L. Examples of alkali metal hydroxides include potassium hydroxide (KOH), sodium hydroxide (NaOH), and lithium hydroxide (LiOH).

### [Method of Recycling Nickel-Hydrogen Rechargeable Battery]

The method of recycling a nickel-hydrogen rechargeable battery according to the present disclosure uses a used nickel-hydrogen rechargeable battery as at least one of a first tank or a second tank in a water electrolysis apparatus,
the water electrolysis apparatus including:
a power source;
an electrolytic solution;
the first tank, which is immersed in the electrolytic solution and includes a positive electrode connected to the power source, a supply opening and a discharge opening for H₂O, and an O₂ gas extraction opening; and
the second tank, which is immersed in the electrolytic solution and includes a negative electrode connected to the power source, a supply opening and a discharge opening for H₂O, and an H₂ gas extraction opening, and
the water electrolysis apparatus being configured to extract O₂ gas from the first tank, and extract H₂ gas from the second tank, by the power source maintaining voltage such that the potential of the positive electrode is higher than the potential of the negative electrode.

In accordance with the method of recycling a nickel-hydrogen rechargeable battery according to the present disclosure, H₂ gas and O₂ gas having high purities can be extracted safely, reutilizing a used nickel-hydrogen rechargeable battery.

The generation of hydrogen gas in a water electrolysis apparatus according to an embodiment of the present disclosure was confirmed by experimentation, as detailed below.

### (Experimental Examples A1 to A4 and B 1 to B3)

A water electrolysis apparatus was prepared that had the same configuration as that of the water electrolysis apparatus 20A illustrated in Fig. 1. In the water electrolysis apparatus, the following electrolytic solution and batteries were used as the electrolyte solution and the first tank and the second tank, and the positive electrode of the first tank and the negative electrode of the second tank were connected to the power source and the resistor (electronic load).
electrolytic solution: potassium hydroxide (KOHaq, pH 15)
first tank and second tank: used nickel-hydrogen rechargeable batteries

In the water electrolysis apparatus, water (H₂O) was supplied from a water supplying pump to the first tank, and water (H₂O) was supplied from a water supplying pump to the second tank. The voltage was maintained by the power source and the resistor such that the potential of the positive electrode of the first tank was higher than the potential of the negative electrode of the second tank. Note that the conditions for maintaining voltage, and specifically, the voltage, average current, time, capacity, input power, quantity of electricity, generated amount of hydrogen, efficiency, distance between electrodes (distance between the positive electrode and the negative electrode) and temperature (temperature of the water electrolysis apparatus overall) are listed in Table 1 and Table 2.

It was confirmed that, after the maintaining of the voltage was started, oxygen (O₂) gas was discharged from the discharge path of the first tank, and hydrogen (H₂) gas was discharged from the discharge path of the second tank.

**Table 1**

| Experimental Example | (a) voltage | (b) average current | (c) time | (d) capacity | (e) input power | (f) quantity of electricity | (i) amount of generated hydrogen | (k) amount of generated hydrogen | efficiency | | distance between electrodes | temperature |
|---|---|---|---|---|---|---|---|---|---|---|---|---|
| | | | | | | | | | (L) | | | |
| | V | A | s | Ah | W | C | mol/h | g/h | Whig | % | mm | °C |
| | | | | b×c /3600 | a×b | b×c | f/g/h | i×j | e/k | 1/(L/39.31)×100 | | |
| A1 | 1.6 | 0.20 | 3600 | 0.20 | 0.3200 | 720 | 0.0037306 | 0.0075 | 42.8889 | 92% | 30.00 | 30 |
| A2 | 1.6 | 0.46 | 3600 | 0.46 | 0.7360 | 1656 | 0.0085803 | 0.0172 | 42.8889 | 92% | 10.00 | 30 |
| A3 | 1.8 | 0.11 | 3600 | 0.11 | 0.1980 | 396 | 0.0020518 | 0.0041 | 48.2500 | 81% | 40.00 | 30 |
| A4 | 1.6 | 0.287 | 3600 | 0.29 | 0.4592 | 1033.2 | 0.0053534 | 0.0107 | 42.8889 | 92% | 20.00 | 30 |
| 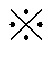 (g) valence = 2, (h) Faraday constant = 96500, (j) molecular weight of hydrogen molecule = 2 | | | | | | | | | | | | |

**Table 2**

| Experimental Example | (a) voltage | (b) average current | (c) time | (d) capacity | (e) input power | (f) quantity of electricity | (i) amount of generated hydrogen | (k) amount of generated hydrogen | efficiency | | distance between electrodes | temperature |
|---|---|---|---|---|---|---|---|---|---|---|---|---|
| | | | | | | | | | (L) | | | |
| | V | A | s | Ah | W | C | mol/h | g/h | Whig | % | mm | °C |
| | | | | b×c /3600 | a×b | b×c | f/g/h | i×j | e/k | 1/(L/39.31)×100 | | |
| B1 | 1.52 | 2.00 | 3600 | 2.00 | 3.0 | 7200 | 0.0373057 | 0.0746 | 40.7444 | 96% | 0.20 | 30 |
| B2 | 1.55 | 3 | 3600 | 3.00 | 4.7 | 10800 | 0.0559585 | 0.1119 | 41.5486 | 95% | 0.20 | 45 |
| B3 | 1.75 | 3.47 | 3600 | 3.47 | 6.1 | 12492 | 0.0647254 | 0.1295 | 46.9097 | 84% | 0.20 | 60 |
| 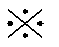 (g) valence = 2, (h) Faraday constant = 96500, (j) molecular weight of hydrogen molecule = 2 | | | | | | | | | | | | |

As shown in Table 1, it can be understood that, as the distance between electrodes decreases from 40 mm to 30 mm, then to 20 mm, and then to 10 mm, the amount of generated hydrogen increases.

Further, as shown in Table 2, it can be understood that, as the temperature increases from 30°C to 45°C, and then to 60°C, the amount of generated hydrogen increases.

### (Experimental Examples C1 to C5)

Experiments were carried out using a water electrolysis apparatus that had the same configuration as that of the water electrolysis apparatus 20C illustrated in Fig. 4 (hereinafter referred to as "pattern 1") and a water electrolysis apparatus that had the same configuration as that of the water electrolysis apparatus 20B illustrated in Figs. 2 and 3 (hereinafter referred to as "pattern 2"). The following electrolytic solution and the batteries were used as the electrolyte solution and the six rechargeable batteries in the first tank and the six rechargeable batteries in the second tank.
electrolytic solution: potassium hydroxide (KOHaq, pH 15)
first tank and second tank: used nickel-hydrogen rechargeable batteries

The water electrolysis apparatus of pattern 1 was used in Experimental Example C1, and the water electrolysis apparatus of pattern 2 was used in Experimental Examples C2 to C5.

Note that the water electrolysis apparatus of pattern 1 had six power sources, the first tank had six nickel-hydrogen rechargeable batteries, and the second tank had six nickel-hydrogen rechargeable batteries, as is the case with the water electrolysis apparatus 20C illustrated in Fig. 4. Each of the power sources was connected to the positive electrode in one nickel-hydrogen rechargeable battery included in the first tank and the negative electrode in one nickel-hydrogen rechargeable battery included in the second tank, so as to configure a circuit. Namely, the water electrolysis apparatus had six circuits. The respective circuits were separated by separators. In each circuit, the positive electrode and the negative electrode were also connected to a resistor serving as an electronic load, in addition to being connected to a power source.

Further, the water electrolysis apparatus of pattern 2 had one power source, the first tank had six nickel-hydrogen rechargeable batteries, and the second tank had six nickel-hydrogen rechargeable batteries, as is the case with the water electrolysis apparatus 20B illustrated in Figs. 2 and 3. The respective positive electrodes of the six nickel-hydrogen rechargeable batteries of the first tank were all connected to the power source, and the respective negative electrodes of the six nickel-hydrogen rechargeable batteries of the second tank were all connected to the power source. Note that the positive electrodes and the negative electrodes were also connected to a resistor serving as an electronic load, in addition to being connected to the power source.

In the water electrolysis apparatus, water (H₂O) was supplied from a water supplying pump to the first tank, and water (H₂O) was supplied from a water supplying pump to the second tank. The voltage was maintained by the power source and the resistor such that the potential of the positive electrode of the first tank was higher than the potential of the negative electrode of the second tank. Note that the conditions for maintaining voltage, and specifically, the voltage, average current, time, capacity, input power, quantity of electricity, amount of generated hydrogen, efficiency, immersion height of electrode (the height at which the positive electrode and the negative electrode were immersed in the electrolytic solution), distance between electrodes (distance between the positive electrode and the negative electrode) and temperature (temperature of the water electrolysis apparatus overall) are listed in Table 3.

It was confirmed that, after the maintaining of the voltage was started, oxygen (O₂) gas was discharged from the discharge path of the first tank, and hydrogen (H₂) gas was discharged from the discharge path of the second tank.

**Table 3**

| Experimental Example | (a) voltage | (b) average current | (c) time | (d) capacit y | (e) input power | (f) quantity of electrici ty | (i) amount of generated hydrogen | (k) amount of generated hydrogen | efficiency | | connect ion pattern | immersion height of electrode | distance between electrodes | temperature |
|---|---|---|---|---|---|---|---|---|---|---|---|---|---|---|
| | | | | | | | | | (L) | | | | | |
| | V | A | s | Ah | W | C | mol/h | g/h | Wh/g | % | | mm | mm | °C |
| | | | | b×c /3600 | a×b | b×c | f/g/h | i×j | e/k | 1/(L/39.31 )×100 | | | | |
| C1 | 1.62 | 6.57 | 3600 | 6.57 | 10.6434 | 23652 | 0.1225492 | 0.2451 | 43.4250 | 91% | 1 | 80.0 | 0.20 | 30 |
| C2 | 2.09 | 17.01 | 3600 | 17.01 | 35.6 | 61236 | 0.3172850 | 0.6346 | 56.0236 | 70% | 2 | 80.0 | 0.20 | 30 |
| C3 | 2.24 | 31.50 | 3600 | 31.50 | 70.6 | 113400 | 0.5875648 | 1.1751 | 60.0444 | 65% | 2 | 40.0 | 0.20 | 30 |
| C4 | 2.96 | 60.06 | 3600 | 60.06 | 177.8 | 216216 | 1.1202902 | 2.2406 | 79.3444 | 50% | 2 | 10.0 | 0.20 | 30 |
| C5 | 3.00 | 90.00 | 3600 | 90.00 | 270.0 | 324000 | 1.6787565 | 3.3575 | 80.4167 | 49% | 2 | 5.0 | 0.20 | 30 |
| 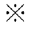 (g) valence = 2, (h) Faraday constant = 96500, (j) molecular weight of hydrogen molecule = 2 | | | | | | | | | | | | | | |

As shown by Experimental Examples C1 and C2 in Table 3, it can be understood that the amount of generated hydrogen is greater in the water electrolysis apparatus of pattern 2 than in the water electrolysis apparatus of pattern 1.

Further, as shown by Experimental Examples C2 to C5 in Table 3, it can be understood that, as the immersion height of the electrode decreases from 80 mm to 40 mm, then to 10 mm, and then to 5 mm, the amount of generated hydrogen increases.

Explanation of Reference Numerals

## Claims

1. A water electrolysis apparatus (20A, 20B, 20C) comprising:
a power source (3);
an electrolytic solution (40);
a first tank (100A, 100B, 100C) immersed in the electrolytic solution (40) and including a positive electrode connected to the power source (3), a supply opening and a discharge opening for H₂O, and an O₂ gas extraction opening; and
a second tank (200A, 200B, 200C) immersed in the electrolytic solution (40) and including a negative electrode connected to the power source (3), a supply opening and a discharge opening for H₂O, and an H₂ gas extraction opening,
wherein O₂ gas is extracted from the first tank (100A, 100B, 100C), and H₂ gas is extracted from the second tank (200A, 200B, 200C), by the power source (3) maintaining voltage such that a potential of the positive electrode is higher than a potential of the negative electrode.

2. The water electrolysis apparatus according to claim 1, wherein at least one of the first tank (100A, 100B, 100C) or the second tank (200A, 200B, 200C) is a nickel-hydrogen rechargeable battery.

3. The water electrolysis apparatus according to claim 2, wherein the nickel-hydrogen rechargeable battery is a used rechargeable battery.

4. The water electrolysis apparatus according to any one of claims 1 to 3, wherein the O₂ gas extraction opening and the H₂ gas extraction opening are respectively provided at gravitational direction upper portions of the first tank (100A, 100B, 100C) and the second tank (200A, 200B, 200C).

5. The water electrolysis apparatus according to any one of claims 1 to 4, wherein the supply opening and the discharge opening of the first tank (100A, 100B, 100C), and the supply opening and the discharge opening of the second tank (200A, 200B, 200C), are provided such that the H₂O flows from a lower portion toward an upper portion in a gravitational direction.

6. The water electrolysis apparatus according to any one of claims 1 to 5, wherein the electrolytic solution (40) has a pH of 15 or more.

7. The water electrolysis apparatus according to any one of claims 1 to 6, wherein a shortest distance between the positive electrode and the negative electrode is from more than 0 mm to 35 mm.

8. The water electrolysis apparatus according to any one of claims 1 to 7, wherein an overall temperature of the water electrolysis apparatus (20A, 20B, 20C) is from 40°C to 80°C.

9. A water electrolysis method using a water electrolysis apparatus (20A, 20B, 20C) including:
a power source (3);
an electrolytic solution (40);
a first tank (100A, 100B, 100C) immersed in the electrolytic solution (40) and including a positive electrode connected to the power source (3), a supply opening and a discharge opening for H₂O, and an O₂ gas extraction opening; and
a second tank (200A, 200B, 200C) immersed in the electrolytic solution (40) and including a negative electrode connected to the power source (3), a supply opening and a discharge opening for H₂O, and an H₂ gas extraction opening,
the method comprising maintaining voltage by the power source (3) such that a potential of the positive electrode is higher than a potential of the negative electrode, and extracting O₂ gas from the first tank (100A, 100B, 100C), and extracting H₂ gas from the second tank (200A, 200B, 200C).

10. The water electrolysis method according to claim 9, wherein a nickel-hydrogen rechargeable battery is used as at least one of the first tank or the second tank.

11. The water electrolysis method according to claim 10, wherein the nickel-hydrogen rechargeable battery is a used rechargeable battery.

12. The water electrolysis method according to any one of claims 9 to 11, wherein the O₂ gas extraction opening and the H₂ gas extraction opening are respectively provided at gravitational direction upper portions of the first tank (100A, 100B, 100C) and the second tank (200A, 200B, 200C).

13. The water electrolysis method according to any one of claims 9 to 12, wherein the supply opening and the discharge opening of the first tank (100A, 100B, 100C), and the supply opening and the discharge opening of the second tank (200A, 200B, 200C), are provided such that the H₂O flows from a lower portion toward an upper portion in a gravitational direction.

14. The water electrolysis method according to any one of claims 9 to 13, wherein the electrolytic solution (40) has a pH of 15 or more.

15. The water electrolysis method according to any one of claims 9 to 14, wherein a shortest distance between the positive electrode and the negative electrode is from more than 0 mm to 35 mm.

16. The water electrolysis method according to any one of claims 9 to 15, wherein an overall temperature of the water electrolysis apparatus (20A, 20B, 20C) is from 40°C to 80°C.

17. A method of recycling a nickel-hydrogen rechargeable battery, the method including using a used nickel-hydrogen rechargeable battery as at least one of a first tank (100A, 100B, 100C) or a second tank (200A, 200B, 200C) in a water electrolysis apparatus (20A, 20B, 20C),
the water electrolysis apparatus (20A, 20B, 20C) including:
a power source (3);
an electrolytic solution (40);
the first tank (100A, 100B, 100C), which is immersed in the electrolytic solution (40) and includes a positive electrode connected to the power source (3), a supply opening and a discharge opening for H₂O, and an O₂ gas extraction opening; and
the second tank (200A, 200B, 200C), which is immersed in the electrolytic solution (40) and includes a negative electrode connected to the power source (3), a supply opening and a discharge opening for H₂O, and an H₂ gas extraction opening, and
the water electrolysis apparatus (20A, 20B, 20C) being configured to extract O₂ gas from the first tank (100A, 100B, 100C), and extract H₂ gas from the second tank (200A, 200B, 200C), by the power source (3) maintaining voltage such that a potential of the positive electrode is higher than a potential of the negative electrode.
